# EUROPEAN PATENT SPECIFICATION

(11) **EP 1 007 494 B1**
(45) Date of publication and mention of the grant of the patent: **16.08.2006**
(21) Application number: 98915085.9
(22) Date of filing: 30.03.1998
(51) Int. Cl.: C05F 7/00, C09K 17/06

(54) **METHOD AND APPARATUS FOR PRODUCING A SOIL IMPROVEMENT MATERIAL AND SUCH A MATERIAL**
VERFAHREN UND VORRICHTUNG ZUR HERSTELLUNG EINES BODENVERBESSERUNGSMITTELS UND DIESES BODENVERBESSERUNGSMITTEL
PROCEDE ET APPAREIL DE PRODUCTION D'UNE SUBSTANCE AMELIORANT LE SOL ET MATIERE EN QUESTION

(30) Priority: 07.04.1997 SE 9701249
(43) Date of publication of application: 14.06.2000
(73) Proprietor: Swedimport i Lindesberg AB, 711 22 Lindesberg (SE)
(72) Inventor: Hedström, Kjell, (SE); Henningson, Bengt, 711 35 Lindesberg (SE)
(74) Representative: Pitkänen, Hannu Alpo Antero
(86) International application number: PCT/SE1998/000584
(87) International publication number: WO 1998/045227

(56) References cited:
- US-A- 5 505 774

## Description

The present invention relates to a method for producing a soil improvement material according to the preamble of claim 1. The invention also relates to an apparatus for carrying out the method according to any of the method claims, which is set forth in the preamble of the first apparatus claim. The invention also relates to a soil improvement material, obtained according to said method and by means of said apparatus respectively and defined in a claim setting forth such a material.

In the paper pulp industry and in paper mills respectively wood fiber slurries in relatively large amounts are obtained as a residual or waste product. A small paper mill produces e.g. about 40 000 m3 wood fiber slurry per year. This product is regarded and handled at present as a mere waste product, which is dumped on refuse tips.

Another waste product is ash, e.g. fly ash from fossil fuel power and heating plants. This waste product also at present ends up on refuse tips, since no practical and economical utilization possibilities are available.

US-A-5 505 774 relates to a method for utilizing wood fiber slurries as a filler, particularly in stuckos and cement pastes (see column 4, lines 50-52). This is an application area different from the production of a soil improvement material, which is the main object of the present invention.

Another important object of the present invention is to develop bases for an economically and environmentally advantageous handling and utilization of at least one of said waste products.

These objects are attained according to the present invention by carrying out a method of the type mentioned in the introduction mainly in the way set forth in the characterizing clause of claim 1. These objects are also attained by mainly designing an apparatus of the type mentioned above according to the invention in such a way as is set forth in the characterizing clause of the first apparatus claim. Said objects are attained also by means of a soil improvement material, obtained according to said method and by means of said apparatus respectively and defined in a claim setting forth this material.

Fundamental principles for the development of the present invention is the understanding, that the sludge-like wood fiber slurry as such is difficult to handle and is an one-sided product comprising about 20 % short wood fibers, about 80 % water and a few percent residuals of chemicals and that a treatment, which results in considerable costs as regards equipment and/or materials and/or energy, would make the end product less attractive and probably make it difficult to sell. Thus, the present inventive idea was developed, which comprises the steps of bringing together the wet wood fiber slurry exactly as it is obtained continuously in the paper mill with at least one dry and consequently moisture and liquid absorbing product, e.g. fly ash, which also is obtained continuously , in fossil fuel combustion plants and otherwise is a not very interesting product and of mixing these two starting products in such proportions and preferably without exterior energy supply, that an easily manageable combination product is obtained, which preferably in pelletized form can be sold to buyers.

Additional characterizing features and advantages of the invention are set forth in the following description, reference being made to the enclosed drawings, which schematicly show a few not limiting embodiments. The drawings show in detail in:
Fig. 1 in a planar view a method and an apparatus according to the invention for producing a soil improvement material ;

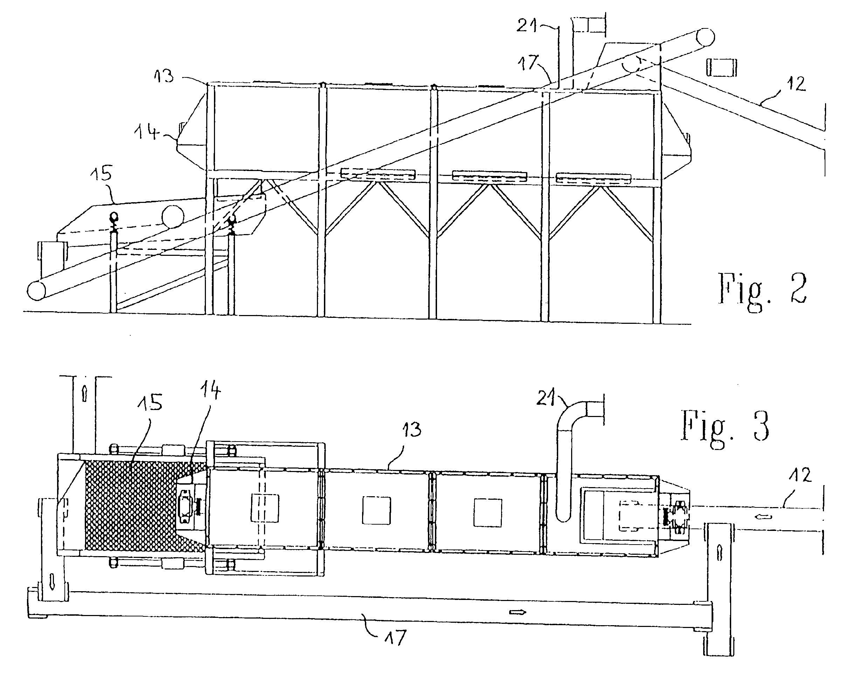

Fig. 2 a treatment station according to Fig. 1, designed to recieve, mix, screen and transport the obtained product;
   and
Fig. 3 the station according to Fig. 2 in a planar view from above.

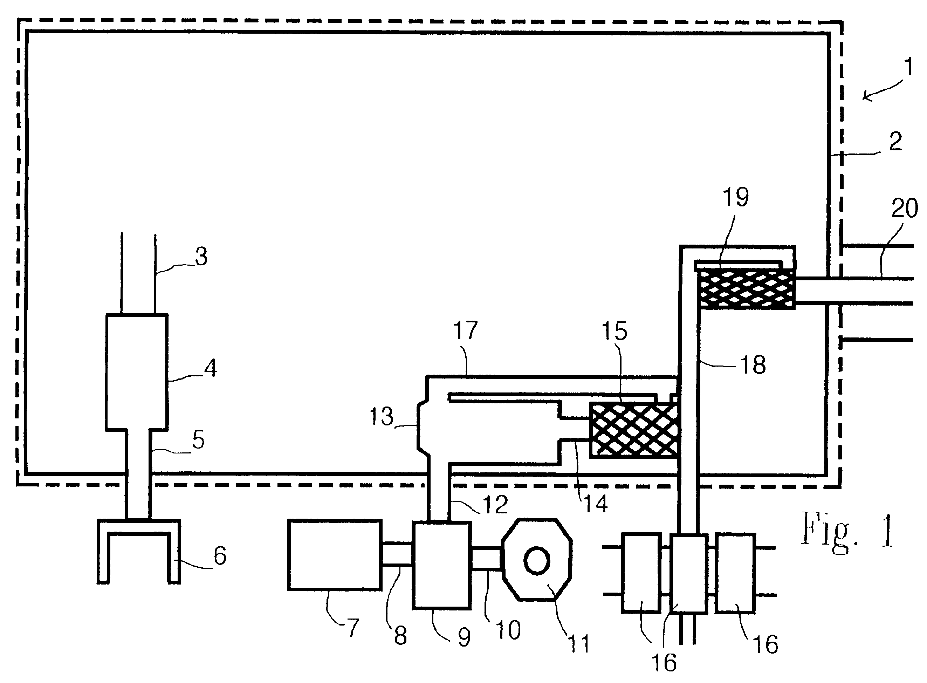

In Fig. 1 a plant 1 is shown, which comprises and contains respectively an apparatus according to the invention. The plant comprises a room 2, which preferably is a section of a paper mill and which through a feeder conduit 3 recieves wood fiber slurry from the paper mill. The slurry passes through a wire or sieve belt press 4, cylinders (not shown) squeezing out a great deal of the water, after which the slurry, which still contains about 80 % water of the original water content, is fed through a feed worm 5 into a receiving station 6, preferably located outside room 2, from which station it is collected by e.g. a front-feed truck (not shown) and is delivered to a bin 7, in the bottom of which there is a feed worm (not shown), which through a conduit 8 feeds the slurry to a pre-mixer 9, which in its turn, through a conduit 10, which also contains a feed worm (not shown), is fed with fly ash from a storage tank 11 for the same.

According to a preferred embodiment 20-50 %,preferably about 35% ash or the like, particularly fly ash from fossil fuel thermal power plants, which ash or the like is dry, up to about 96%, is mixed with 40-80 %, preferably about 65 % wood fiber slurry, which is dry up to about 20 %, which means that there is about 80% water content of the original water content. Other moisture and liquid absorbing substances can also be used, e.g. torn up peat. In case lime is used, crushed lime having a particle size of up to 2 mm is preferred.

In mixer 9 a pre-mixing is carried out and the mixture obtained in this way is fed through a feed worm 12 into a main mixer 13, which e.g. is relatively long and is provided with a mixing mechanism, which extends in the longitudinal direction of the main mixer, preferably designed as a bar having protruding arms, in which main mixer the two components are mised thoroughly , a product which as such is homogenous being obtained , which comprises small lumps, which at the outlet end of the main mixer are pumped out through a conduit 14 onto a screen 15, through which lumps of up to a certain maximum size fall and then are conveyed e.g. to transport containers 16 in order to packet them in bags.

Lumps having a size larger than said maximum size are conveyed back by means of a conveyor belt 17 to the inlet end of the main mixer.

Alternatively or furthermore the lumps , which fall through screen 15, can be conveyed by means of a belt conveyor 18 to a pelletizer device 19 with an outgoing conveyor 20 and be removed therefrom according to the description above.

Thus, by means of the invention it is not necessary to add e.g. thermal energy, but the invention on the contrary is also based on the idea , that e.g. lime or the fly ash, which i.a. contains lime, generates heat, when it is exposed to the wet wood fiber slurry. In this way and due to the mechanical handling an internal drying process is commenced, which preferably in combination with ventilation means 21, connected to the main mixer, results in a considerably dry end product. The heat from the ventilation means can, in a way known per se, be utilized for other purposes, e.g. for heating room 2.

A soil improvement material obtained according to the method described above and by means of the apparatus described above respectively can be used in a simple and direct way by buyers thereof, e.g. gardering people and farmers, because it is alkaline to some extent and has a pH-value of about 8. The end product is, as has been mentioned above a granulate or pellets , which can be spread manually or be means of suitable conventional machine equipment.

The present invention is not limited to the embodiments described above and shown in the drawings, but it can be modified and supplemented in an arbitrary fashion within the scope of the enclosed patent claims. Thus, additional substances can be admixed into the mixture in an arbitrary production phase.

## Claims

1. A method for producing a soil improvement material, wood fiber slurry from paper mills being mixed with lime and treated further to obtain a packetable product, **characterized in that** said wood fiber slurry being forced to pass a wire or a sieve belt press (4) for its - the wood fibre slurry - water contents to be substantially diminished by about 20% down to about 80% of the original water content, after which 40-80%, preferably about 65%, of the so dewatered slurry is premixed with 20-50%, preferably about 35%, ash and 0-30% moisture and liquid absorbing material, after which a main mixing is carried out in order to convert the so treated slurry into homogeneous lumps, which are subjected to a size reduction process through screening, or that the product subsequent to said treatment steps and a possible size reduction process is pelletized.

2. A method according to claim **1, characterized in that** as ash is used fly ash from fossil fuel power and heating plants.

3. A method according to claim 1, **characterized in that** as a moisture and fluid absorbing material is used peat, particularly torn up peat.

4. A method according to any of claims 1-3, **characterized in that** the heat, which 20 is generated during the production of the material, is removed by ventilation and re-used, e.g. in heat exchangers.

5. An apparatus for carrying out the method for producing a soil improvement material according to any of claims 1-4, **characterized in that** the apparatus is integrated in a plant (1), which comprises a room (2), which is a section of a paper mill, and which through a feeder conduit (3) is provided to receive wood fiber slurry from said paper mill, that said feeder conduit is connected to a wire or a sieve belt press (4) provided to press a large portion of water out of the wood fiber slurry" which wire or the like (4) is connected to a transport device, preferably a feed worm (5), designed to feed the dewatered wood fiber slurry to a receiving station (6), which is located outside said room (2), that the partially dewatered wood fiber slurry from the receiving station (6) is provided to be fed into a pre-mixer (9), to which also are connected storage means (11) for ash and other moisture and liquid absorbing materials, respectively, through a feed worm or the like (10), proportioning means for the various components also being provided for premixing about 65% of the so dewatered slurry with about 35% ash and 0-30% moisture and liquid absorbing material, that by means of a further feed worm or the like (12) the pre-mixed components are provided to be fed into a main mixer (13) for a thorough mixing of the components to a homogenous product, namely, in the form of small lumps, which are provided 5 to be fed through a conduit or the like (14) to a screen (15) for a particle size maximizing process and transport of end product.

6. An apparatus according to claim 5, **characterized by** a bin (7) and/or a feed worm or the like (8) for feeding the partially dewatered wood fiber slurry from said receiving station (6) into said pre-mixer (9).

7. An apparatus according to claim 5, **characterized by** re-circulation means (17) for bringing back particles, which are too large, to the inlet end of the mixer, or by means for feeding the homogenized product from the main mixer (13) to a pelletizing device (19).

8. An apparatus according to any of claims 5-8, **characterized by** ventilation means (21), connected to the mixing means (9 and/or 13), to remove warm air and heat, respectively, generated in the mixing means as well as means for utilizing the removed heat, e.g. a heat exchanger.

9. A soil improvement material obtained by a method according to any of claims 1-4 and/or by means of an apparatus according to any of claims 5-9, respectively, **comprising** 40-80%, preferably about 65%, wood fiber slurry, which initially is dry to about 20%, 20.-50%, preferably about 35%, ash as well as 0-30% moisture and fluid absorbing materials.

10. A soil improvement material according to claim 9, **wherein** said ash is fly ash from fossil fuel power and heating plants, **and/or wherein** said moisture and fluid absorbing material is torn up peat.

## Patentansprüche

1. Verfahren zur Herstellung eines Bodenverbesserungsmaterials, wobei Holzfaserbrei von Papierfabriken mit Kalk vermischt und weiterbehandelt wird, um ein verpackbares Produkt zu erhalten, **gekennzeichnet dadurch, dass** besagter Holzfaserbrei durch eine Draht- oder Siebbandpresse (4) geführt wird, um seinen Wassergehalt im wesentlichen um etwa 20% bis etwa 80% des ursprünglichen Wassergehalts zu vermindern, wonach 40-80%, vorzugsweise etwa 65%, des so entwässerten Breis mit 20-50%, vorzugsweise etwa 35%, Asche und 0-30% eines feuchtigkeits- und flüssigkeitsabsorbierenden Materials vorgemischt wird, wonach eine Hauptmischung durchgeführt wird, um den so behandelten Brei in homogene Klumpen umzuwandeln, die einem Größenreduzierungsverfahren durch Selektion ausgesetzt werden, oder dass das Produkt nach besagten Behandlungsphasen und einem möglichen Größenreduzierungsverfahren pelletiert wird.

2. Verfahren nach Anspruch 1, **gekennzeichnet dadurch, dass** als Asche Flugasche von Verbrennungs- und Heizkraftwerken benutzt wird.

3. Verfahren nach Anspruch 1, **gekennzeichnet dadurch, dass** als feuchtigkeits- und flüssigkeitsabsorbierendes Material Torf benutzt wird, besonders aufgerissener Torf.

4. Verfahren nach einem beliebigen der Ansprüche 1-3, **gekennzeichnet dadurch, dass** die Hitze, die während der Produktion des Materials erzeugt wird, durch Belüftung entfernt und wiederverwendet wird, z.B. in Wärmetauschern.

5. Vorrichtung zur Durchführung des Verfahrens zur Herstellung eines Bodenverbesserungsmaterials nach einem beliebigen der Ansprüche 1-4, **gekennzeichnet dadurch, dass** die Vorrichtung in eine Anlage (1) integriert ist, die einen Raum (2) umfasst, der Teil einer Papierfabrik ist, und die durch eine Zufuhrleitung (3) Holzfaserbrei von besagter Papierfabrik erhält, dass besagte Zufuhrleitung mit einer Draht- oder Siebbandpresse (4) verbunden ist, um ein große Menge Wasser aus dem Holzfaserbrei zu drücken, wobei der Draht oder Ähnliches (4) mit einer Transportvorrichtung verbunden ist, vorzugsweise einer Zufuhrschnecke (5), um den entwässerten Holzfaserbrei zu einer Empfangsstation (6) zu leiten, die sich außerhalb des Raumes (2) befindet, dass der teilweise entwässerte Holzfaserbrei von der Empfangsstation (6) in einen Vormischer (9) eingespeist wird, mit dem auch Lagerungsmittel (11) für Asche bzw. andere feuchtigkeits- und flüssigkeitsabsorbierende Materialien verbunden sind, durch eine Zufuhrschnecke oder Ähnliches (10), Dosiermittel für die verschiedenen Bestandteile sind auch zum Vormischen von etwa 65% des so entwässerten Breis mit etwa 35% Asche vorgesehen und 0-30% feuchtigkeits- und flüssigkeitsabsorbierendes Material, dass durch eine weitere Zufuhrschnecke oder Ähnliches (12) die vorgemischten Bestandteile in einen Hauptmischer (13) für ein Durchmischen der Bestandteile zu einem homogenen Produkt eingespeist werden, und zwar in Form von kleinen Klumpen, die durch eine Leitung oder Ähnliches (14) zu einem Sieb (15) geleitet werden, für ein Korngrößen-Maximierungsverfahren und zum Transport des Endprodukts.

6. Vorrichtung nach Anspruch 5, **gekennzeichnet durch** einen Behälter (7) und/oder eine Zufuhrschnecke oder Ähnliches (8), um den teilweise entwässerten Holzfaserbrei von besagter Empfangsstation (6) dem Vormischer (9) zuzuführen.

7. Vorrichtung nach Anspruch 5, **gekennzeichnet durch** Umlaufmittel (17) zum Zurückbringen von Teilchen, die zu groß sind, zu dem Einlassende des Mischers, oder mittels Zuführen des homogenisierten Produkts von dem Hauptmischer (13) zu einer Pelletierungsvorrichtung (19).

8. Vorrichtung nach einem beliebigen der Ansprüche 5-8, **gekennzeichnet durch** Belüftungsmittel (21), verbunden mit den Mischmitteln (9 und/oder 13), um in den Mischmitteln erzeugte Warmluft bzw. Hitze zu entfernen, sowie Mittel, um die entfernte Hitze zu nutzen, z.B. einen Wärmetauscher.

9. Ein Bodenverbesserungsmaterial, das durch eine Methode nach einem beliebigen der Ansprüche 1-4 erhalten worden ist und/oder mittels einer Vorrichtung nach einem beliebigen der Ansprüche 5-9, bzw. mit 40-80%, vorzugsweise etwa 65%, Holzfaserbrei, der anfänglich bis etwa 20% trocken ist, 20-50%, vorzugsweise etwa 35%, Asche sowie 0-30% feuchtigkeits- und flüssigkeitsabsorbierende Materialien.

10. Ein Bodenverbesserungsmaterial nach Anspruch 9, wobei besagte Asche Flugasche von Verbrennungs- und Heizkraftwerken ist, und/oder wobei besagtes feuchtigkeits- und flüssigkeitsabsorbierendes Material aufgerissener Torf ist.

## Revendications

1. Procédé de production d'une substance améliorant le sol, une suspension épaisse de fibre de bois en provenance de papeteries étant mélangée avec de la chaux et ensuite traitée pour obtenir un produit emballable, **caractérisé en ce que** ladite suspension épaisse de fibre de bois étant forcée à passer un fil métallique ou un filtre à bande (4) pour diminuer - la suspension épaisse de fibre de bois - son contenu d'eau substantiellement d'environ 20% jusqu'à environ 80% du contenu d'eau original, après quoi 40-80%, de préférence environ 65%, de la suspension épaisse épaissie de cette façon est prémélangé avec 20-50%, de préférence environ 35%, de cendre et 0-30% d'un matériau absorbant l'humidité et les liquides, après quoi un mélange principal est réalisé afin de convertir la suspension épaisse traitée de cette façon en morceaux homogènes, qui sont soumis à un procédé de réduction de taille à travers filtrage, ou que le produit après lesdites phases de traitement et un éventuel procédé de réduction de taille est réduit en granulés.

2. Procédé selon la revendication 1, **caractérisé en ce que** des cendres volantes de centrales thermiques et de chauffage est utilisée comme cendre.

3. Procédé selon la revendication 1, **caractérisé en ce que** comme matériau absorbant l'humidité et les fluides on utilise de la tourbe, particulièrement de la tourbe déchiquetée.

4. Procédé selon l'une quelconque des revendications 1-3, **caractérisé en ce que** la chaleur produite pendant la production du matériau est éliminée par ventilation et réutilisée, par exemple dans des échangeurs de chaleur.

5. Dispositif pour réaliser la méthode de production d'une substance améliorant le sol selon l'une quelconque des revendications 1-4, **caractérisé en ce que** le dispositif est intégré dans une installation (1) comprenant une chambre (2), qui est une section d'une papeterie, et qui à travers un conduit alimentateur (3) est destiné à recevoir la suspension épaisse de fibre de bois de ladite papeterie, **en ce que** ledit conduit alimentateur est connecté à un fil métallique ou un filtre à bande (4) pourvu pour presser une grande partie de l'eau hors de la suspension épaisse de fibre de bois, lequel fil métallique ou similaire (4) est connecté à un dispositif de transport, de préférence une hélice d'alimentation (5) conçue pour alimenter la suspension épaisse de fibre de bois épaissie à une station réceptrice (6) qui est située à l'extérieur de ladite chambre (2), **en ce que** la suspension épaisse de fibre de bois épaissie en provenance de la station réceptrice (6) est alimentée dans un prémélangeur (9), auquel on a également relié des moyens de stockage (11) pour de la cendre et d'autres matériaux absorbant l'humidité et les liquides, respectivement, à travers une hélice d'alimentation ou similaire (10), des moyens de dosage pour les divers composants étant également pourvus pour prémélanger environ 65% de la suspension épaisse épaissie de cette façon avec environ 35% de cendres et 0-30% de matériau absorbant l'humidité et les liquides, **en ce qu'**au moyen d'une ultérieure hélice d'alimentation ou similaire (12) les composants prémélangés sont alimentés dans un mélangeur principal (13) pour un mélange complet des composants en un produit homogène, c'est-à-dire sous la forme de petits morceaux, qui sont alimentés à travers un conduit ou similaire (14) à un écran (15) pour un procédé de maximisation de la dimension des grains et pour le transport du produit final.

6. Dispositif selon la revendication 5, **caractérisé par** une boîte (7) et/ou une hélice d'alimentation ou similaire (8) pour alimenter la suspension épaisse de fibre de bois partiellement épaissie depuis ladite station réceptrice (6) dans ledit prémélangeur (9).

7. Dispositif selon la revendication 5, **caractérisé par** des moyens de recirculation (17) pour ramener les particules trop grandes à l'extrémité d'entrée du mélangeur, ou en alimentant le produit homogénéisé du mélangeur principal (13) à un dispositif de granulation (19).

8. Dispositif selon l'une quelconque des revendications 5-8, **caractérisé par** des moyens de ventilation (21), reliés au moyen mélangeur (9 et/ou 13), pour éliminer l'air chaud et la chaleur, respectivement, produit dans le moyen mélangeur ainsi que des moyens pour utiliser la chaleur éliminée, par exemple un échangeur de chaleur.

9. Substance pour améliorer le sol, obtenue par un procédé selon l'une quelconque des revendications 1-4 et/ou au moyen d'un dispositif selon l'une quelconque des revendications 5-9, respectivement, comprenant 40-80%, de préférence environ 65%, de la suspension épaisse de fibre de bois, qui est initialement sèche environ de 20%, 20-50%, de préférence environ 35%, de cendres ainsi que 0-30% de matériaux absorbant l'humidité et les liquides.

10. Substance pour améliorer le sol selon la revendication 9, où ladite cendre consiste en cendres volantes de centrales thermiques et de chauffage, et/ou où ledit matériau absorbant l'humidité et les liquides est de la tourbe déchiquetée.
